# FASCICULE DE BREVET EUROPEEN

(11) **EP 2 173 207 B1**
(45) Date de publication et mention de la délivrance du brevet: **02.05.2012**
(21) Numéro de dépôt: 08829998.7
(22) Date de dépôt: 09.07.2008
(51) Int. Cl.: A43B 7/08, A43B 7/12, A43B 13/18, A43B 13/22, A43B 1/00, B29D 35/12

(54) **SEMELLE D'USURE POUR ARTICLE CHAUSSANT ET PROCÉDÉ ET MOULE POUR LA FABRICATION DE LADITE SEMELLE**
VERSCHLEISSSOHLE FÜR EINEN SCHUH SOWIE VERFAHREN UND FORM ZUR HERSTELLUNG EINER SOLCHEN SOHLE
WEAR SOLE FOR FOOTWEAR AND METHOD AND MOULD FOR MAKING SUCH SOLE

(30) Priorité: 25.07.2007 FR 0705436
(43) Date de publication de la demande: 14.04.2010
(73) Titulaire: Groupe Royer, 35133 Javene (FR)
(72) Inventeur: Favraud, Bernard, 49300 Cholet (FR)
(74) Mandataire: Laget, Jean-Loup
(86) Numéro de dépôt international: PCT/FR2008/001003
(87) Numéro de publication internationale: WO 2009/034256

(56) Documents cités:
- WO-A-2005/070658
- WO-A-2007/054983
- DE-U1-202004 000 307
- FR-A- 2 863 457
- US-A1- 2006 143 942

## Description

La présente invention concerne une semelle d'usure pour article chaussant ainsi qu'un procédé et un moule pour la fabrication de ladite semelle.

Elle concerne plus particulièrement une semelle d'usure pour article chaussant du type dont au moins une partie de la face externe d'appui de la semelle possède des parties en saillie, disposées au niveau et/ou en périphérie des zones d'appui du pied et des espaces vides disposés entre les parties en saillie, chaque partie en saillie étant formée à partir d'un bossage évidé de la semelle délimitant une cavité ouverte côté face interne de la semelle, lesdits bossages étant reliés entre eux par une portion de la semelle formant pont.

De telles semelles permettent, du fait de la configuration de leur face externe, de réaliser une stabilisation du pied dans la chaussure et de limiter l'effondrement de certaines zones du pied tout en respectant la déformation élastique de celui-ci jusqu'à une certaine limite où cette déformation devient exagérée et risque d'être traumatisante.

Les espaces vides forment des arches entre les bossages. Sous l'effet de la pression, les bossages peuvent quant à eux se comprimer ou venir en appui sur le fond de la chaussure pour assurer suivant leur nature, la stabilisation du pied si ces bossages sont relativement rigides, ou l'amortissement des chocs. S'ils sont réalisés en un matériau absorbant emmagasinant une énergie qui va être restituée lorsque la pression diminue, la marche et la course sont favorisées en économisant l'énergie musculaire.

Une telle semelle procure donc un confort accru, une bonne répartition des appuis avec décharge des zones où les appuis sont les plus importants, une stabilisation et un contrôle de la déformation du pied, un retour d'énergie ainsi qu'un massage de la voûte plantaire et une stimulation sanguine.

L'exemple d'une telle semelle est notamment décrit dans la demande internationale WO 2004/028285 A.

Parallèlement, sont apparues sur le marché des semelles respirantes comme l'illustre le brevet EP 0 910 964.

Dans ce cas, la semelle faite d'un élastomère est conformée de manière à former une pluralité de dômes ayant une convexité dirigée vers le sol. Chaque dôme forme une chambre et a au moins une très petite fente traversante qui est normalement fermée sous l'effet de l'élasticité de la matière et qui permet un écoulement extérieur d'un mélange d'air et de vapeur d'eau formé à l'intérieur de la chaussure lorsqu'une compression appliquée par la plante du pied d'un utilisateur engendre une surpression au niveau des chambres formées intérieurement par ledit dôme. Cette semelle est équipée d'une membrane étanche à l'eau et perméable à la vapeur interposée entre ladite semelle et une première perméable à la vapeur ou perforée associée à ladite semelle. La partie inférieure de la tige qui coopère avec la semelle, la semelle et la membrane sont scellées de façon périmétrique dans des régions où la semelle et la membrane sont réunies.

Cette solution ne donne pas satisfaction car elle ne permet pas une respiration permanente de la semelle du fait que les orifices ne s'ouvrent que lors d'une déformation de ladite semelle. Par ailleurs, la forme externe de la semelle correspondant à la face d'appui au sol de ladite semelle n'est pas conçue pour permettre une bonne répartition des appuis.

Il en est de même de la semelle décrite dans le brevet européen EP 0 382 904. Ce brevet décrit une structure de semelle pour chaussure comprenant au moins une partie inférieure ayant une surface d'usure et au moins une partie supérieure fixée sur la partie inférieure. La partie inférieure présente une pluralité de micropores traversant son épaisseur, et est recouverte par au moins une membrane fabriquée en matière microporeuse étanche à l'eau susceptible de permettre la transpiration. La partie supérieure, quant à elle fixée sur la partie inférieure, présente des orifices qui traversent toute son épaisseur. Dans ce cas, c'est toute la semelle qui est recouverte d'orifices traversants, de sorte qu'en cas de pluie les risques d'accumulation d'eau entre la semelle et la membrane imperméable à l'eau sont importants amenant à la création d'une poche d'eau inconfortable à l'intérieur de ladite chaussure. Par ailleurs, les zones de respiration de la chaussure sont ménagées dans des zones déformables de ladite chaussure, de sorte qu'à nouveau la respiration de cette chaussure ne peut être garantie en toute circonstance en fonction des déformations subies par ladite chaussure.

A titre d'arrière-plan technologique, il peut être cité le document US 2006/143942 qui décrit une semelle comportant un seul bossage évidé combiné à deux filtres uniquement destinés à prévenir l'intrusion de débris.

Il peut être également cité les documents FR-A-2.863.457, DE 20 2004 000307, WO 2007/054983 et WO 2005/070658 qui décrivent des semelles d'usure comportant des membranes localisées. Ces semelles ne présentent aucune caractéristique permettant l'obtention d'une semelle confortable capable d'assurer un haut niveau d'amortissement en fonction de la morphologie de l'utilisateur dans lequel le risque de formation de poche d'eau entre la membrane et la semelle est minimisé.

Un but de la présente invention est de proposer une semelle dont la conception permet d'obtenir un comportement indépendant de chaque surface unitaire de la semelle réalisée sous forme d'un bossage, de manière à pouvoir s'adapter aux caractéristiques de morphologie et de comportement, en particulier en terme de pression de contact de chaque pied tout en autorisant une respiration permanente de ladite semelle.

Un autre but de la présente invention est de proposer une semelle respirante dont la conception permet d'une part d'éviter la formation d'une poche entre membrane et semelle susceptible de se remplir d'eau lorsque, par exemple, la semelle prend appui sur un sol détrempé, d'autre part de garantir une respiration quelles que soient les déformations subies par la semelle.

A cet effet, l'invention a pour objet une semelle d'usure pour article chaussant du type dont au moins une partie de la face externe d'appui de la semelle possède des parties en saillie, disposées au niveau et/ou en périphérie des zones d'appui du pied et des espaces vides disposés entre les parties en saillie, chaque partie en saillie étant formée à partir d'un bossage évidé de la semelle délimitant une cavité ouverte côté face interne de la semelle, lesdits bossages étant reliés entre eux par une portion de la semelle formant pont, caractérisée en ce qu'au moins une partie de la portion de la semelle formant pont entre lesdits bossages est munie d'orifices traversants de communication permanente entre faces interne et externe de ladite semelle, lesdits orifices étant fermés par une membrane étanche à l'eau et perméable à la vapeur d'eau et à l'air.

Grâce à la conception de la face externe de la semelle sous forme de bossages séparés par des espaces vides formant des arches entre bossages et à la présence d'orifices traversants ouverts de manière permanente au droit des espaces vides, on obtient une semelle respirante et confortable sans nuire à cette possibilité d'être utilisée dans des conditions atmosphériques difficiles (fortes pluies par exemple). Contrairement à l'état de la technique où les orifices traversants étaient ménagés dans une zone déformable de la semelle, la disposition des orifices traversants dans une zone non déformable et surélevée de la semelle permet de garantir en toutes circonstances une respiration de la semelle sans nuire au confort de cette dernière.

Selon un mode de réalisation préféré de l'invention, la membrane est positionnée côté face interne de la semelle et obture le débouché des orifices traversants dans ladite face.

De préférence, la membrane est une membrane découpée, entourant au moins partiellement l'ouverture des cavités formées par chacun des bossages en laissant libre lesdites ouvertures.

Grâce à cette disposition, le risque de formation de poche de rétention d'eau entre semelle et membrane est réduit, voire exclu. Parallèlement chaque cavité peut être garnie d'un garnissage quelconque, éventuellement amovible, sans nuire à l'action de ladite membrane et sans entraver le fonctionnement de cette dernière.

L'invention a encore pour objet, un procédé de fabrication d'une semelle d'usure pour article chaussant, du type précité, à l'aide d'un moule en au moins deux parties, servant l'une, au moulage de la face interne, l'autre, au moulage de la face externe de ladite semelle, lesdites parties de moule étant mobiles entre une position ouverte et une position fermée dans laquelle elles délimitent une cavité de moulage à l'intérieur de laquelle est introduite la matière de moulage constitutive de la semelle, caractérisé en ce qu'il consiste à pré-équiper la partie de moule servant au moulage de la face externe de la semelle de broches, montées sur ressort, prenant appui en position fermée de la cavité de moulage sur la partie de moule servant au moulage de la portion formant pont de la face interne de la semelle, lesdites broches étant disposées dans la cavité de moulage aux emplacements correspondants aux orifices traversants de communication entre faces interne et externe de la semelle à former et à disposer, avant fermeture du moule, à la manière d'un insert, une membrane imperméable à l'eau et perméable à l'air ou à la vapeur d'eau, à l'intérieur de ladite cavité, ladite membrane venant s'interposer entre les broches et la partie de moule servant au moulage de la face interne de la semelle à l'état fermé du moule.

L'invention a encore pour objet, un moule pour la fabrication d'une semelle d'usure, par mise en oeuvre du procédé précité, ledit moule comportant au moins deux parties, servant l'une, au moulage de la face interne, l'autre, au moulage de la face externe de ladite semelle, lesdites parties de moule étant mobiles entre une position ouverte et une position fermée dans laquelle elles délimitent une cavité de moulage à l'intérieur de laquelle est introduite la matière de moulage constitutive de la semelle, caractérisé en ce que la partie de moule servant au moulage de la face externe de ladite semelle est prééquipée de broches, montées sur ressort, prenant appui en position fermée de la cavité sur la partie de moule servant au moulage de la portion formant pont de la face interne de la semelle, lesdites broches étant disposées dans la cavité de moulage aux emplacements correspondants aux orifices traversants de communication entre faces interne et externe de la semelle à former.

L'invention sera bien comprise à la lecture de la description suivante d'exemples de réalisation, en référence aux dessins annexés dans lesquels :
La figure 1 représente une vue en coupe d'un article chaussant équipé d'une semelle conforme à l'invention ;

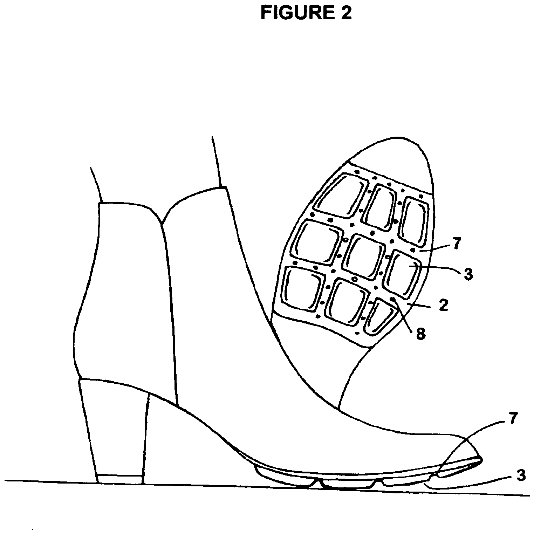

La figure 2 représente une vue de côté et de dessous d'un article chaussant équipé d'une semelle conforme à l'invention ;
La figure 3 représente une vue en coupe d'un autre mode de réalisation d'un article chaussant équipé d'une semelle conforme à l'invention ;
La figure 4 représente une vue en coupe d'un autre mode de réalisation d'un article chaussant équipé d'une semelle conforme à l'invention ;
La figure 5 représente une vue en coupe d'un autre mode de réalisation d'un article chaussant équipé d'une semelle conforme à l'invention ;
Les figures 6A et 6B représentent sous forme de vues en coupe un moule conforme à l'invention, en position ouverte (figure 6A) et en position fermée (figure 6B) ;
La figure 7 représente une vue partielle en perspective de l'intérieur du moule des figures 6A et 6B ;
La figure 8 représente une vue partielle en perspective de la face interne d'une semelle conforme à l'invention et
La figure 9 représente une vue en perspective de la face interne d'une semelle conforme à l'invention.

Comme mentionné ci-dessus, la semelle 1 d'usure, objet de l'invention, qui constitue de préférence un ensemble monobloc d'un seul tenant, présente une face externe 2 destinée à venir en appui au sol et une face 15 interne tournée vers le pied de l'utilisateur.

Au moins une partie de la face externe 2 possède des parties 3 en saillie disposées au niveau et/ou en périphérie des zones d'appui du pied et des espaces 6 vides formant arches disposés entre les parties 3 en saillie. Chaque partie 3 en saillie est formée à partir d'un bossage 3 évidé de la semelle 1 délimitant une cavité 4 ouverte côté face interne 15 de la semelle. Les bossages 3 sont reliés entre eux par une portion de la semelle formant pont 7. Cette portion de la semelle formant pont 7 disposée au droit des espaces vides permet une déformation des bossages 3 indépendamment les uns des autres en fonction de la charge sur la face interne 15 de ladite semelle 1. On obtient ainsi une meilleure adhérence de la semelle d'usure quel que soit le sol. Il doit être noté que généralement bossages et portions de la semelle formant pont sont réalisés d'une seule pièce.

Dans les exemples représentés, les bossages 3 sont à sommet plat ou arrondi. Dans le cas de sommet arrondi, les bossages délimitent une surface d'appui au sol d'allure générale convexe de type lobe. La face interne 15 de la semelle présente, au niveau de ces bossages 3, une surface d'allure générale alvéolaire. De manière caractéristique à l'invention, au moins une partie de la portion de la semelle formant pont 7 entre lesdits bossages 3 est munie d'orifices 8 traversants de communication permanente entre faces interne 15 et externe 2 de ladite semelle 1. Ces orifices 8 sont fermés par une membrane 9 étanche à l'eau et perméable à la vapeur d'eau ou à l'air. Grâce à la nature de la membrane 9, une circulation d'air peut s'opérer de manière permanente par l'intermédiaire desdits orifices 8 traversants entre les faces interne 15 et externe 2 de ladite semelle.

De préférence, la membrane 9 est positionnée côté face interne 15 de la semelle 1 et obture le débouché des orifices 8 traversants dans ladite face 15.

De telles membranes, par exemple de type goretex (marque déposée), sont bien connues à ceux versés dans cet art et ne seront pas décrites plus en détail ci-après.

A titre d'exemple, chaque pont 7 présente une largeur entre deux cavités 4 comprise de préférence entre 0,5 cm et 2 cm pour des cavités dont la plus petite dimension peut varier de 1 à 4 cm. En d'autres termes, les ponts sont dimensionnés par rapport aux cavités de la semelle pour autoriser une déformation indépendante de chaque cavité 4. Les cavités 4 présentent quant à elles une profondeur comprise de préférence entre 0,25 cm et 10 cm. Les formes des cavités peuvent être diverses et variées.

De préférence, les bossages s'étendent dans la partie antérieure de la semelle correspondant à la plante du pied.

La membrane 9 est, de préférence, une membrane découpée , entourant au moins partiellement l'ouverture 5 des cavités 4 formées par chacun des bossages 3 en laissant libre lesdites ouvertures 5.

Cette membrane 9 ne recouvre donc que les portions formant pont 7 entre lesdites cavités de sorte qu'un garnissage 10 peut, si nécessaire, être introduit dans au moins certaines desdites cavités.

Cette solution est préférée à la solution dans laquelle la membrane recouvre la totalité de la face interne de ladite semelle.

En effet, généralement au moins une partie des cavités 4 est respectivement remplie d'un garnissage 10, tel qu'un matériau élastiquement déformable.

De préférence, le garnissage se présente sous forme d'un élément en matériau élastiquement déformable, par exemple sous la forme d'une poche souple d'air ou de mousse de densité variable en fonction des caractéristiques d'amortissement recherchées ou de gel ou de billes ou similaire. Un élément élastiquement déformable peut également comporter un ressort.

Chaque élément élastiquement déformable présente de préférence, une forme complémentaire de la cavité 4 de la semelle 1, de manière à venir s'insérer par simple emboîtement dans ladite cavité 4 et épouser les contours de la cavité à l'état inséré dans cette dernière.

Lorsque l'on applique une charge sur la semelle d'usure, par exemple lors de la marche, les bossages se déforment et les éléments de garnissage en matériau élastiquement déformable également.

Dans un mode de réalisation préféré de l'invention, au moins une partie des bossages est répartie de part et d'autre d'un axe longitudinal de la semelle. Les éléments élastiquement déformables présentent une dureté différenciée de part et d'autre dudit axe de manière à ménager un côté de semelle dit ferme et un côté de semelle dit souple en fonction des caractéristiques de répartition de pression de contact du pied sur la semelle dans des conditions statiques et/ou dans des conditions dynamiques.

Ce traitement différencié des éléments élastiquement déformables selon qu'ils se situent côté intérieur de la semelle ou côté extérieur de la semelle, permet de corriger des positions du pied liées à une pronation ou à une supination trop accentuée. Ces positions engendrent des hyper-appuis qui provoquent l'usure accélérée de la semelle.

Pour contrer les effets de tels appuis, les éléments élastiquement déformables sont traités de manière différente selon leur position au niveau de la semelle.

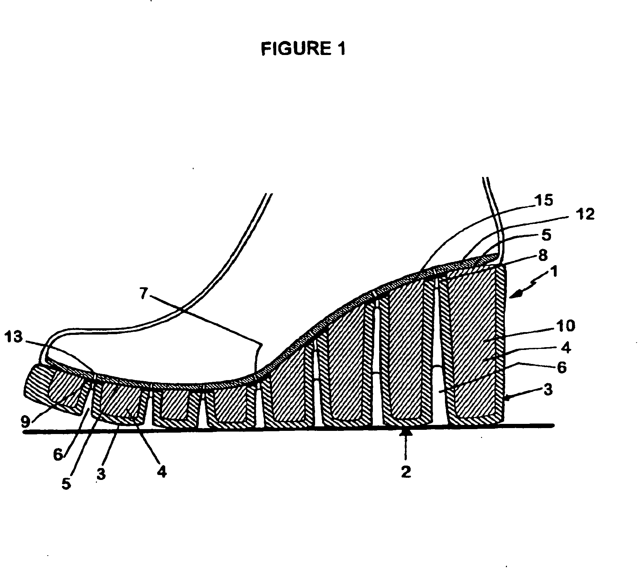

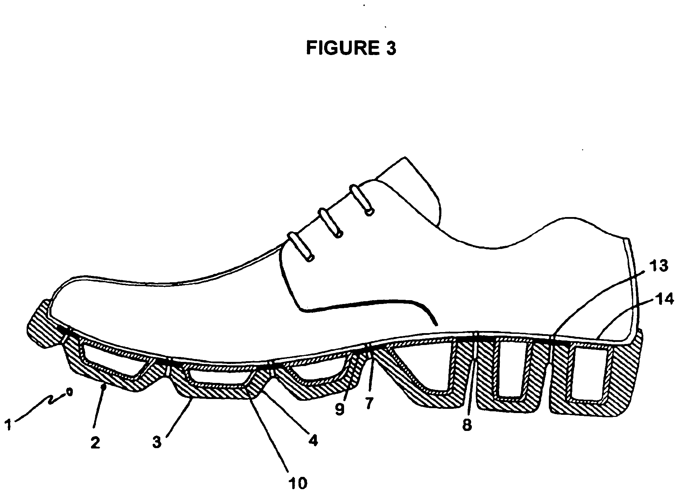

Les garnissages 10, disposés respectivement dans une cavité 4 d'un bossage 3, peuvent être indépendants les uns des autres comme l'illustrent les figures 1 et 3.

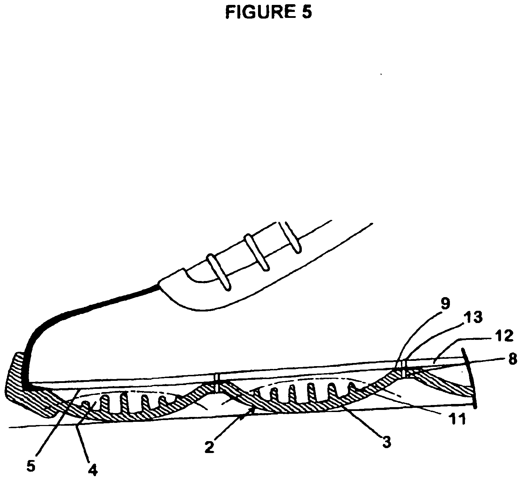

Dans un autre mode de réalisation représenté à la figure 5, au moins une partie des cavités 4 est munie intérieurement de plots 11 ou ailettes de compression, prenant naissance sur la face formant fond de ladite cavité 4 et faisant saillie en direction de l'intérieur de ladite cavité 4. Ces plots 11 ou ailettes de compression peuvent être de hauteur identique ou différente d'un plot à l'autre.

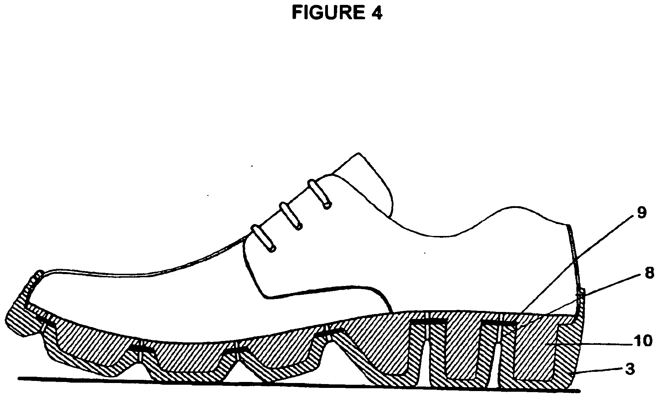

Dans un autre mode de réalisation représenté à la figure 4, les éléments en matériau élastiquement déformables disposés respectivement dans une cavité sont reliés entre eux sous forme d'une plaque qui forme à l'état inséré des éléments élastiquement déformables dans les cavités une surface plane destinée à constituer soit directement la surface d'appui du pied, soit une surface servant à la réception d'une première de montage.

Dans l'exemple représenté à la figure 4, l'article chaussant ne comporte aucune première de montage. La première de confort est moulée de manière anatomique côté face interne de l'article chaussant et moulée spécifiquement pour venir se loger à l'intérieur des cavités de la semelle sur la face opposée. Ce garnissage peut être réalisé amovible.

Lors de la fabrication de la semelle, la membrane 9 peut être fixée à la semelle 1 de différentes manières. Dans un mode de réalisation préféré, la semelle 1 est une pièce moulée et la membrane 9 est solidarisée de manière étanche à la semelle 1 au moulage.

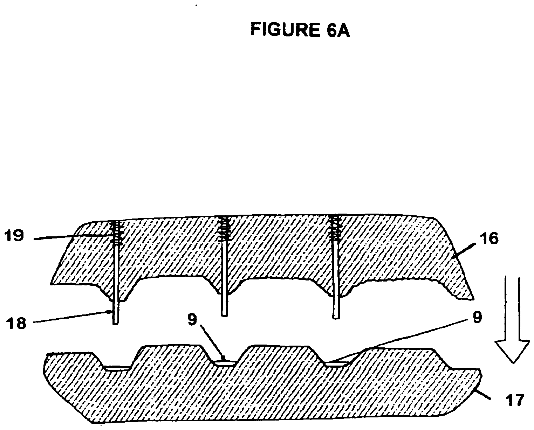

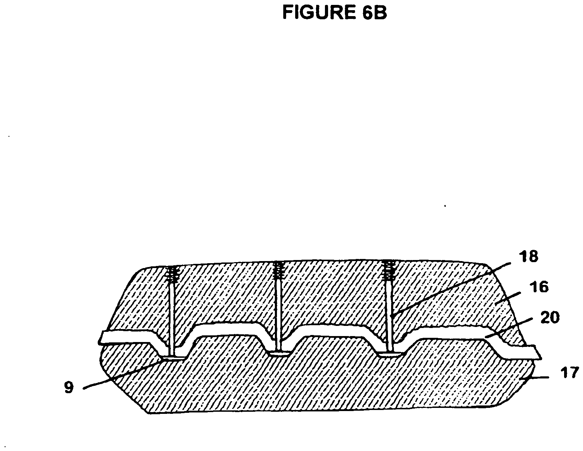

Pour permettre la fabrication d'une telle semelle, on utilise un moule conforme aux figures 6A à 7. Pour obtenir le résultat souhaité, on dispose d'un moule en au moins deux parties dont la partie 16 de moule servant au moulage de la face externe 2 de la semelle 1 est prééquipée de broches 18 montées sur ressort 19. Ces broches 18 prennent appui, en position fermée de la cavité du moulage, sur la partie 17 de moule servant au moulage de la portion formant pont 7 de la face interne 15 de la semelle 1. Ces broches 18 sont disposées dans la cavité de moulage aux emplacements correspondants aux orifices 8 traversants de communication entre faces interne 15 et externe 2 de la semelle 1 à former.

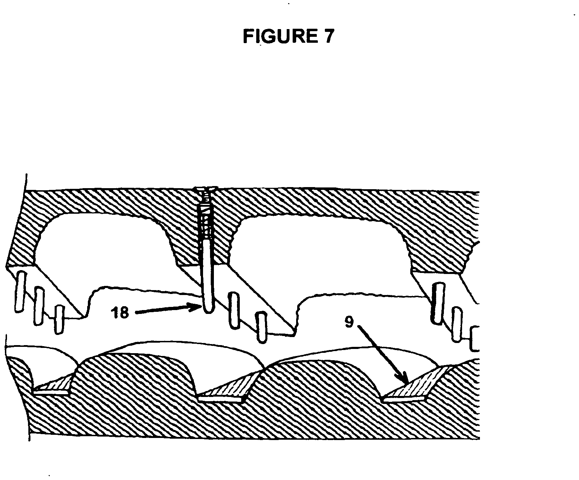

La membrane 9 imperméable à l'eau et perméable à l'air ou à la vapeur d'eau, est, quant à elle, disposée, avant fermeture du moule, à la manière d'un insert, à l'intérieur de ladite cavité de moulage et vient s'interposer entre les broches 18 et la partie 16 de moule servant au moulage de la face interne 15 de la semelle 1 à l'état fermé du moule. Ce prépositionnement de la membrane 9 est plus particulièrement visible à la figure 7.

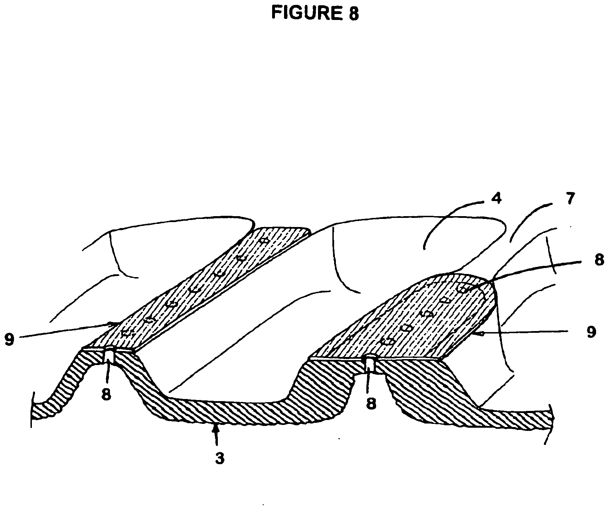

On obtient ainsi un résultat conforme à celui représenté à la figure 8, partie de gauche de ladite figure.

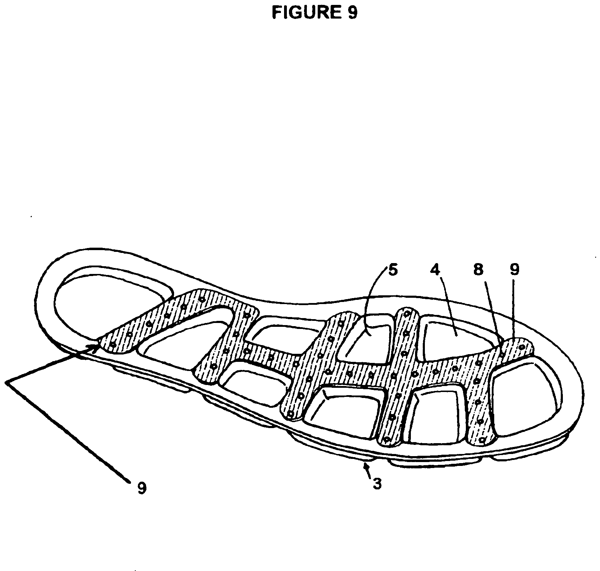

Dans un autre mode de réalisation représenté partie de droite sur la figure 8, la membrane 9 est fixée par collage à la semelle. Il doit être noté que dans les figures 8 et 9, la membrane 9 est représentée transparente pour permettre la visualisation des orifices 8 traversants et en particulier la visualisation de leur débouché dans la face interne 15 de ladite semelle.

Une fois la membrane 9 solidarisée à la semelle 1, la semelle est solidarisée à la tige pour former un article chaussant. Les moyens de liaison entre tige et semelle peuvent être divers et variés.

A l'état solidarisé de la tige à la semelle, la face interne 15 de la semelle 1 est revêtue soit d'une première 12 de montage ou de confort perforée, soit d'un prolongement perforé de la tige 14, les perforations 13 de la première 12 de montage ou de confort ou de la tige 14 s'étendant en regard des orifices 8 traversants de la semelle 1.

La figure 1 illustre ainsi le cas où la semelle est surmontée d'une première 12 de montage perforée. La figure 3 illustre le cas où la tige 14 se prolonge pour former l'équivalent d'une première de montage, ledit prolongement étant perforé.

Dans un mode de réalisation particulier de l'invention, du type dans lequel la semelle présente au moins une partie des cavités 4 respectivement remplie d'un garnissage 10, tel qu'un matériau élastiquement déformable, la première 12 de montage ou de confort et le garnissage 10 peuvent être réalisés d'une seule pièce pour former l'équivalent de ce qui est représenté à la figure 4.

Comme l'illustre ce qui est décrit précédemment, il existe donc un grand nombre de modes de réalisation de ladite semelle sans sortir du cadre de l'invention.

## Revendications

1. Semelle (1) d'usure pour article chaussant du type dont au moins une partie de la face externe (2) d'appui de la semelle possède des parties (3) en saillie, disposées au niveau et/ou en périphérie des zones d'appui du pied et des espaces (6) vides disposés entre les parties (3) en saillie, chaque partie (3) en saillie étant formée à partir d'un bossage (3) évidé de la semelle (1) délimitant une cavité (4) ouverte côté face interne (15) de la semelle, lesdits bossages (3) étant reliés entre eux par une portion de la semelle formant pont (7), **caractérisée en ce qu'**au moins une partie de la portion de la semelle formant pont (7) entre lesdits bossages (3) est munie d'orifices (8) traversants de communication permanente entre faces interne (15) et externe (2) de ladite semelle (1), lesdits orifices (8) étant fermés par une membrane (9) étanche à l'eau et perméable à la vapeur d'eau et à l'air.

2. Semelle (1) d'usure pour article chaussant selon la revendication 1, **caractérisée en ce que** la membrane (9) est positionnée côté face interne (15) de la semelle (1) et obture le débouché des orifices (8) traversants dans ladite face (15).

3. Semelle (1) d'usure pour article chaussant selon la revendication 2, **caractérisée en ce que** la membrane (9) est une membrane découpée, entourant au moins partiellement l'ouverture (5) des cavités (4) formées par chacun des bossages (3) en laissant libre lesdites ouvertures (5).

4. Semelle (1) d'usure pour article chaussant selon l'une des revendications 1 à 3, **caractérisée en ce que** la semelle (1) est une pièce moulée et **en ce que** la membrane (9) est solidarisée de manière étanche à la semelle (1) au moulage.

5. Semelle (1) d'usure pour article chaussant selon l'une des revendications 1 à 4, **caractérisée en ce qu'**au moins une partie des cavités (4) est respectivement remplie d'un garnissage (10), tel qu'un matériau élastiquement déformable.

6. Semelle (1) d'usure pour article chaussant selon l'une des revendications 1 à 4, **caractérisée en ce qu'**au moins une partie des cavités (4) est munie intérieurement de plots (11) ou ailettes de compression, prenant naissance sur la face formant fond de ladite cavité (4) et faisant saillie en direction de l'intérieur de ladite cavité (4).

7. Semelle (1) d'usure pour article chaussant selon l'une des revendications 1 à 6, **caractérisée en ce que** la face interne (15) de la semelle (1) est revêtue soit d'une première (12) de montage ou de confort perforée, soit d'un prolongement perforé de la tige (14), les perforations (13) de la première (12) de montage ou de confort ou de la tige (14) s'étendant en regard des orifices (8) traversants de la semelle (1).

8. Semelle (1) d'usure pour article chaussant selon la revendication 7, du type dans laquelle au moins une partie des cavités (4) est respectivement remplie d'un garnissage (10), tel qu'un matériau élastiquement déformable,
**caractérisée en ce que** la première (12) de montage ou de confort et le garnissage (10) sont réalisés d'une seule pièce.

9. Procédé de fabrication d'une semelle (1) d'usure pour article chaussant conforme à l'une des revendications 1 à 8, à l'aide d'un moule en au moins deux parties (17, 16), servant l'une (17), au moulage de la face interne (15), l'autre (16), au moulage de la face externe (2) de ladite semelle (1), lesdites parties (17, 16) de moule étant mobiles entre une position ouverte et une position fermée dans laquelle elles délimitent une cavité (20) de moulage à l'intérieur de laquelle est introduite la matière de moulage constitutive de la semelle (1), **caractérisé en ce qu'**il consiste à pré-équiper la partie (16) de moule servant au moulage de la face externe (2) de la semelle (1) de broches (18), montées sur ressort (19), prenant appui, en position fermée de la cavité de moulage, sur la partie (17) de moule servant au moulage de la portion formant pont (7) de la face interne (15) de la semelle (1), lesdites broches (18) étant disposées dans la cavité de moulage aux emplacements correspondants aux orifices (8) traversants de communication entre faces interne (15) et externe (2) de la semelle à former et à disposer, avant fermeture du moule, à la manière d'un insert, une membrane (9) imperméable à l'eau et perméable à l'air ou à la vapeur d'eau, à l'intérieur de ladite cavité, ladite membrane (9) venant s'interposer entre les broches (18) et la partie (16) de moule servant au moulage de la face interne (15) de la semelle (1) à l'état fermé du moule.

10. Moule pour la fabrication d'une semelle (1) d'usure conforme à l'une des revendications 1 à 8, par mise en oeuvre d'un procédé conforme à la revendication 9, ledit moule comportant au moins deux parties (17, 16), servant l'une (17), au moulage de la face interne (15), l'autre (16), au moulage de la face externe (2) de ladite semelle (1), lesdites parties (17, 16) de moule étant mobiles entre une position ouverte et une position fermée dans laquelle elles délimitent une cavité (20) de moulage à l'intérieur de laquelle est introduite la matière de moulage constitutive de la semelle (1),
**caractérisé en ce que** la partie (16) de moule servant au moulage de la face externe (2) de ladite semelle (1) est prééquipée de broches (18), montées sur ressort (19), prenant appui en position fermée de la cavité sur la partie (17) de moule servant au moulage de la portion formant pont (7) de la face interne (15) de la semelle (1), lesdites broches (18) étant disposées dans la cavité de moulage aux emplacements correspondants aux orifices (8) traversants de communication entre faces interne (15) et externe (2) de la semelle à former.

## Claims

1. A wear sole (1) for footwear of the type, for which at least one portion of the external supporting face (2) of the sole has protruding portions (3), positioned at the level and/or at the periphery of the foot supporting areas and empty spaces (6) positioned between the protruding portions (3), each protruding portion (3) being formed from a recessed boss (3) of the sole (1) delimiting an open cavity (4) on the internal face side (15) of the sole, said bosses (3) being connected together through a portion of the sole forming a bridge (7), **characterized in that** at least part of the bridge-forming sole portion (7) between said bosses (3) is provided with through-orifices (8) for permanent communication between internal (15) and external (2) faces of said sole (1), said orifices (8) being closed by a waterproof membrane (9), pervious to steam and to air.

2. The wear sole (1) for footwear according to claim 1, **characterized in that** the membrane (9) is positioned on the side of the internal face (15) of the sole (1) and obturates the outlet of the through-orifices (8) in said face (15).

3. The wear sole (1) for footwear according to claim 2, **characterized in that** the membrane (9) is a cut-out membrane, surrounding at least partly the opening (5) of the cavities (4) formed by each of the bosses (3) leaving said openings (5) free.

4. The wear sole (1) for footwear according to one of claims 1 to 3, **characterized in that** the sole (1) is a molded part and **in that** the membrane (9) is sealably firmly attached to the sole (1) upon molding.

5. The wear sole (1) for footwear according to one of claims 1 to 4, **characterized in that** at least one portion of the cavities (4) is respectively filled with filler (10), such as an elastically deformable material.

6. The wear sole (1) for footwear according to one of claims 1 to 4, **characterized in that** at least one portion of the cavities (4) is interiorly provided with compression pads (11) or fins, originating on the face forming a bottom of said cavity (4) and protruding towards the inside of said cavity (4).

7. The wear sole (1) for footwear according to one of claims 1 to 6, **characterized in that** the internal face (15) of the sole (1) is either coated with a perforated mounting or comfort insole (12), or with a perforated extension of the stem (14), the perforations (13) of the mounting or comfort insole (12) or of the stem (14) extending facing the through-orifices (8) of the sole (1).

8. The wear sole (1) for footwear according to claim 7, of the type in which at least one portion of the cavities (4) is respectively filled with a filler (10), such as an elastically deformable material, **characterized in that** the mounting or comfort insole (12) and the filler (10) are made in one single piece.

9. A method for making a wear sole (1) for footwear according to one of claims 1 to 8, by means of a mold in at least two portions (17, 16), one (17) being used for molding the internal face (15), the other one (16) for molding the external face (2) of said sole (1), said mold portions (17, 16) being mobile between an open position and a closed position in which they delimit a molding cavity (20) inside which the molding material making up the sole (1) is introduced, **characterized in that** it consists of pre-equipping the mold portion (16) used for molding of the external face (2) of the sole (1) with pins (18), mounted on a spring (19), in the closed position of the molding cavity, bearing upon the mold portion (17) used for molding the bridge-forming portion (7) of the internal face (15) of the sole (1), said pins (18) being positioned in the molding cavity in locations corresponding to the through-orifices (8) for communication between internal (15) and external (2) faces of the sole to be formed and of positioning, before closing the mold, as an insert, a waterproof membrane (9) pervious to air or to steam, inside said cavity, said membrane (9) being interposed between the pins (18) and the mold portion (16) used for molding of the internal face (15) of the sole (1) in the closed condition of the mold.

10. A mold for making a wear sole (1) according to one of claims 1 to 8, by applying a method according to claim 9, said mold including at least two portions (17, 16), one (17) being used for molding the internal face (15), the other one (16) for molding the external face (2) of said sole (1), said mold portions (17, 16) being mobile between an open position and a closed position in which they delimit a molding cavity (20) inside which the molding material making up the sole (1) is introduced,
**characterized in that** the mold portion (16) being used for molding the external face (2) of said sole (1) is pre-equipped with pins (18), mounted on a spring (19), in the closed position of the cavity, bearing on the mold portion (17) being used for molding the bridge-forming portion (7) of the internal face (15) of the sole (1), said pins (18) being positioned in the molding cavity in locations corresponding to the through-orifices (8) for communication between internal (15) and external (2) faces of the sole to be formed.

## Patentansprüche

1. Verschleißsohle (1) für einen Schuh des Typs, von dem mindestens ein Teil der äußeren Abstützfläche (2) der Sohle hervorstehende Teile (3) besitzt, die auf Ebene und/oder an der Peripherie der Abstützzonen des Fußes angeordnet sind, und leere Räume (6), die zwischen den hervorstehenden Teilen (3) angeordnet sind, wobei jedes hervorstehende Teil (3) von einem ausgehöhlten Vorsprung (3) der Sohle (1) gebildet wird, der einen zur Innenseite (15) der Sohle offenen Hohlraum (4) begrenzt, wobei die Vorsprünge (3) miteinander durch einen Abschnitt der Sohle verbunden sind, der eine Brücke (7) bildet,
**dadurch gekennzeichnet, dass** mindestens ein Teil des Abschnitts der Sohle, der eine Brücke (7) bildet, zwischen den Vorsprüngen (3) mit durchgehenden Öffnungen (8) für die ständige Kommunikation zwischen der Innen- (15) und Außenseite (2) der Sohle (1) ausgestattet ist, wobei die Öffnungen (8) von einer wasserdichten und Wasserdampf und Luft durchlässigen Membran (9) verschlossen sind.

2. Verschleißsohle (1) für einen Schuh nach Anspruch 1,
**dadurch gekennzeichnet, dass** die Membran (9) an der Innenseite (15) der Sohle (1) positioniert ist und die Mündung der durchgehenden Öffnungen (8) in die Seite (15) verschließt.

3. Verschleißsohle (1) für einen Schuh nach Anspruch 2,
**dadurch gekennzeichnet, dass** die Membran (9) eine geschnittene Membran ist, die die Öffnung (5) der Hohlräume (4), die von jedem Vorsprung (3) gebildet werden, zumindest teilweise umgibt und dabei die Öffnungen (5) freilässt.

4. Verschleißsohle (1) für einen Schuh nach einem der Ansprüche 1 bis 3,
**dadurch gekennzeichnet, dass** die Sohle (1) ein Formteil ist und dass die Membran (9) beim Formen dicht mit der Sohle (1) verbunden wird.

5. Verschleißsohle (1) für einen Schuh nach einem der Ansprüche 1 bis 4,
**dadurch gekennzeichnet, dass** mindestens ein Teil der Hohlräume (4) jeweils mit einer Einlage (10) wie einem elastisch verformbaren Material gefüllt ist.

6. Verschleißsohle (1) für einen Schuh nach einem der Ansprüche 1 bis 4,
**dadurch gekennzeichnet, dass** mindestens ein Teil der Hohlräume (4) innen mit Kompressionszapfen (11) oder -flügeln ausgestattet ist, die von der Seite ausgehen, die den Boden des Hohlraums (4) bildet und nach innen in den Hohlraum (4) hervorstehen.

7. Verschleißsohle (1) für einen Schuh nach einem der Ansprüche 1 bis 6,
**dadurch gekennzeichnet, dass** die Innenseite (15) der Sohle (1) entweder mit einer perforierten Montage- oder Komfort-Brandsohle (12) ausgekleidet ist oder mit einer perforierten Verlängerung des Schafts (14), wobei sich die Perforierungen (13) der Montage- oder Komfort-Brandsohle (12) oder des Schafts (14) gegenüber den durchgehenden Öffnungen (8) der Sohle (1) erstrecken

8. Verschleißsohle (1) für einen Schuh nach Anspruch 7 des Typs, bei dem mindestens ein Teil der Hohlräume (4) jeweils mit einer Einlage (10) wie einem elastisch verformbaren Material gefüllt ist,
**dadurch gekennzeichnet, dass** die Montage- oder Komfort-Brandsohle (12) und die Einlage (10) aus einem einzigen Stück hergestellt sind.

9. Verfahren zur Herstellung einer Verschleißsohle (1) für einen Schuh nach einem der Ansprüche 1 bis 8 mit Hilfe einer Form aus mindestens zwei Teilen (17, 16), wobei das eine (17) der Formung der Innenseite (15), das andere (16) der Formung der Außenseite (2) der Sohle (1) dient, wobei die Teile (17, 16) der Form zwischen einer offenen Stellung und einer geschlossenen Stellung bewegbar sind, in der sie einen Formungshohlraum (20) begrenzen, in den das Formmaterial, das die Sohle (1) bildet, eingeführt wird,
**dadurch gekennzeichnet, dass** es darin besteht, den Teil (16) der Form, der der Formung der Außenseite (2) der Sohle (1) dient, mit Stiften (18) vorauszustatten, die auf Feder (19) montiert sind, die sich in geschlossener Stellung des Formungshohlraums auf dem Teil (17) der Form abstützen, das der Formung des Abschnitts dient, der die Brücke (7) der Innenseite (15) der Sohle (1) bildet, wobei die Stifte (18) im Formungshohlraum an den Stellen angeordnet sind, die den durchgehenden Öffnungen (8) für die Kommunikation zwischen der Innen- (15) und Außenseite (2) der zu formenden Sohle entsprechen, und vor dem Schließen der Form in der Art eines Einsatzes eine wasserundurchlässige und Luft oder Wasserdampf durchlässige Membran (9) im Hohlraum anzuordnen, wobei sich die Membran (9) zwischen den Stiften (18) und dem Teil (16) der Form anordnet, der im geschlossenen Zustand der Form zum Formen der Innenseite (15) der Sohle (1) dient.

10. Form zur Herstellung einer Verschleißsohle (1) nach einem der Ansprüche 1 bis 8 durch Umsetzung eines Verfahrens nach Anspruch 9, wobei die Form mindestens zwei Teile (17, 16) aufweist, wobei das eine (17) der Formung der Innenseite (15), das andere (16) der Formung der Außenseite (2) der Sohle (1) dient, wobei die Teile (17, 16) der Form zwischen einer offenen Stellung und einer geschlossenen Stellung bewegbar sind, in der sie einen Formungshohlraum (20) begrenzen, in den das Formmaterial, das die Sohle (1) bildet, eingeführt wird,
**dadurch gekennzeichnet, dass** Teil (16) der Form, der zur Formung der Außenseite (2) der Sohle (1) dient, mit Stiften (18) vorausgestattet ist, die auf Feder (19) montiert sind, die sich in geschlossener Stellung des Hohlraums auf dem Teil (17) der Form abstützen, das der Formung des Abschnitts dient, der die Brücke (7) der Innenseite (15) der Sohle (1) bildet, wobei die Stifte (18) im Formungshohlraum an den Stellen angeordnet sind, die den durchgehenden Öffnungen (8) für die Kommunikation zwischen der Innen- (15) und Außenseite (2) der zu formenden Sohle entsprechen.
